# EUROPÄISCHE PATENTANMELDUNG

(11) **EP 0 842 990 A2**
(43) Veröffentlichungstag der Anmeldung: **20.05.1998**
(21) Anmeldenummer: 97119296.8
(22) Anmeldetag: 05.11.1997
(51) Int. Cl.: C09C 1/00, C09K 3/00, C09D 7/12, C04B 33/14

(54) **Kugelförmige Farbpigmente, Verfahren zu ihrer Herstellung und deren Verwendung**

(30) Priorität: 14.11.1996 DE 19647037
(71) Anmelder: Degussa Aktiengesellschaft, 60311 Frankfurt (DE)
(72) Erfinder: Sperlich, Jörg, Dr., 63073 Offenbach (DE); Brandes, Ralph, Dr., 35415 Pohlheim (DE); Jacobsen, Hauke, Dr., 79618 Rheinfelden (DE); Katusic, Stipan, 65779 Kelkheim (DE); Schulz, Andreas, Dr., 63263 Neu-Isenburg (DE)

(57) **Zusammenfassung**

Die Erfindung betrifft kugelförmige Farbpigmente mit einem mittleren Teilchendurchmesser von kleiner 10 µm auf der Basis eines Oxids, Mischoxids oder Silikats.

Die Pigmente sind erhältlich mittels Sprüh-Pyrolyse-Technik: Eine oxid- oder silikatbildende Metallverbindungen enthaltende Lösung wird in ein Aerosol überführt und dieses, vorzugsweise nach Vortrocknung, einem Pyrolysereaktor zugeführt; das Pigment wird aus dem Pyrolysegas abgetrennt.

Die erfindungsgemäßen Farbpigmente eignen sich zur Herstellung von keramischen Dekoren und zum Einfärben von Kunststoffen, synthetischen Folien, Fasern sowie Lacken. Aufgrund der Kugelgestalt werden außergewöhnliche anwendungstechnische Eigenschaften erzielt.

## Beschreibung

Die Erfindung richtet sich auf Farbpigmente aus im wesentlichen kugelförmigen Pigmentteilchen mit einem mittleren Teilchendurchmesser von kleiner 10 µm auf der Basis von Oxiden, Mischoxiden oder Silikaten. Insbesondere handelt es sich um Farbpigmente auf Spinellbasis. Ein weiterer Gegenstand richtet sich auf ein Verfahren zur Herstellung erfindungsgemäßer Farbpigmente sowie deren Verwendung.

Die klassische Herstellung anorganischer Pigmente umfaßt im allgemeinen die Schritte Homogenisieren geeigneter Rohstoffe, Überführen des Gemischs in Schamottetiegel, Glühen des Rohstoffgemischs, Brechen des Glühguts, einoder mehrstufige Naßmahlung auf Farbkörperfeinheit und Trocknen. Zur Herstellung der Rohstoffe können zusätzliche Schritte, beispielsweise ein Fällungsprozeß, nötig sein. Die Herstellung erfordert somit einen hohen technischen Aufwand, der mit abnehmendem Korndurchmesser erheblich zunimmt. Pigmente mit einem Korndurchmesser im wenige Mikron bis Submikronbereich sind durch die üblichen Zerkleinerungstechniken praktisch nicht mehr erhältlich; zudem besteht dann die Gefahr einer Farbbeeinflussung des Pigments durch Abrieb von eingesetzten Mahlhilfsmitteln und Mühlen.

Die Herstellung von keramischen Dekorfarben und Emails macht bisher ein gemeinsames Mahlen, üblicherweise Naßmahlen, eines Farbpigments mit einem Fluß, etwa einer Glasfritte, erforderlich, um die für den Siebdruck erforderliche Feinheit zu erzielen und eine gute Farbentwicklung beim Dekorbrand zu ermöglichen. Demgemäß besteht ein Ziel der Erfindung darin, Farbpigmente für keramische Einsatzzwecke in einer solchen Form und Körnung bereitzustellen, wodurch anstelle eines Mahlprozesses ein einfaches trockenes Mischen treten kann.

Die nach konventionellen Verfahren erhaltenen Pigmente weisen eine unregelmäßige Gestalt mit Bruchkanten auf. Derartige Pigmente bereiten, selbst wenn der mittlere Korndurchmesser ausreichend klein und das Kornspektrum ausreichend eng sind, Probleme beim Verspinnen damit eingefärbter Materialien: So kommt es beim Schmelzspinnen zu Korrosionserscheinungen an den Spinndüsen oder anderen Störungen, etwa durch Verblocken der Spinndüsen. Derartige Probleme begrenzten bisher den Einsatz üblicher Pigmente mit nicht-kugelförmiger Gestalt zur Herstellung spinngefärbter Fasern.

Möglichst feinteilige Pigmente, vorzugsweise solche, welche zusätzlich ein sehr enges Kornspektrum aufweisen sollten, sind insbesondere überall dort von Bedeutung, wo die pigmentierten Materialien in Form sehr dünner Dekorschichten, Folien oder Fasern Anwendung finden. Ein Interesse besteht auch an im wesentlichen kugelförmigen Pigmenten, um Anwendungsprobleme zu vermeiden, die durch die bisher unregelmäßige Form der Pigmentpartikel bedingt waren.

Aus dem ES-Patent 2 074 399 ist ein Verfahren zur Herstellung von kugelförmigen feinteiligen Pigmenten auf der Basis von Zirkoniumsilikat bekannt: Hierbei wird ein Gemisch aus einem Zirkoniumalkoxid, wie Zr(O-n-C₃H₇)₄, und einem Siliciumalkoxid, wie Si(OC₂H₅)₄, mittels feuchter Luft vorhydrolysiert. Nach Zugabe von Vanadylchlorid - Molverhältnis V/Zr 0,02 bis 0,04 - und Überführen des so erhaltenen vorkondensierten Gemischs in ein Aerosol wird mittels feuchter Luft zu Ende kondensiert. Das amorphe Pulver wird dann 24 h bei 1500 °C kalziniert. Nachteile dieses Verfahrens sind die langen Reaktionszeiten für die Vorhydrolyse und Kalzinierung; zudem kommt es, wie anhand der Untersuchung von Spinell- und ZrO₂-Pigmenten festgestellt wurde, bei der Kalzinierung zu einem Zusammensintern der zunächst kugelförmigen Partikel, was einen nachfolgenden Mahlprozeß erforderlich macht und damit die Kugelform der Pigmentpartikel beeinträchtigt.

Keramische kugelförmige Partikel im wenige Mikron bis Submikronbereich sind mittels der sogenannten Sprüh-Pyrolysetechnik zugänglich. Bei dieser Technik wird ein Aerosol aus einer Lösung oder Suspension von Stoffen, aus denen das herzustellende feine Pulver gebildet werden kann, in einen beheizbaren Reaktor eingebracht, wobei das Lösungs- oder Suspensionsmittel verdampft und feste Rückstandspartikel gebildet werden, die ihrerseits durch eine Zersetzungs- oder eine andere chemische Reaktion in das gewünschte Produkt überführt werden können.

Mg-Al-Spinell läßt sich (Ceramic International Vol. 8 (1982) 17-21) unter Einsatz einer Mg-nitrat und Al-nitrat enthaltenden Lösung durch Sprühpyrolysetechnik in Form von Hohlkugeln mit einem Teilchendurchmesser von 1 bis 10 µm herstellen. Durch Verwendung eines brennbaren Gases zum Versprühen der Lösung ist es möglich, MgAl₂O₄ sowie andere farblose Oxidkeramikpulver auf der Basis von Mg, Y, Al und Zr mit einer Partikelgröße im Bereich von 0,1 bis 3 µm zu erhalten (EP-B 0 371 211). Die alleinige oder Mitverwendung von Metallverbindungen farbgebender Elemente bei der Sprühpyrolysetechnik zwecks Erhalt eines farbigen Oxids oder Mischoxids und dessen Verwendung als Farbpigment wird in den beiden vorgenannten Dokumenten weder erwähnt noch nahegelegt.

Gemäß EP-A 0 681 989 wird zur Herstellung eines Multi-Element-Metalloxids als Vorstufe für Hochtemperatur-Supraleitfähigkeitskeramik durch Sprühpyrolyse das Aerosol in eine unabhängig betriebene Knallgasflamme eingebracht, wobei eine geringere Flammentemperatur, nämlich 800 bis 1100 °C, einstellbar ist und damit die Mischoxide nicht in den für den genannten Zweck weniger geeigneten Hochtemperaturmodifikationen, sondern in anderen Modifikationen erhältlich sind. Eine weitere Modifizierung des Sprühpyrolyseverfahrens zur Herstellung von Metalloxidpulvern für Hochleistungskeramiken lehrt die DE-OS 43 07 333: Hiernach wird eine Mikroemulsion aus einer organischen Phase und einer darin dispergierten wäßrigen Lösung der Metallverbindungen in Aerosolform dem Pyrolysereaktor zugeführt. Wenngleich unter den Elementen als Quellen für die Metalloxidpulver auch farbgebende Elemente, wie V, Cr, Mn, Fe, Co, Ni und Cu, genannt sind, handelt es sich hierbei, wie auch das Beispiel der DE-OS 43 07 333 zeigt, um Elemente, die in geringer Menge in einer an sich farblosen Matrix enthalten sind. Anregungen, Verbindungen farbgebender Elemente allein oder in Kombination mit anderen Verbindungen in solcher Menge in einer als Aerosol dem Pyrolysereaktor zuzuführenden Lösung einzusetzen, daß farbintensive Pulver resultieren und diese als Farbpigment zu verwenden, lassen sich den beiden letztgenannten Dokumenten nicht entnehmen.

Aufgabe der vorliegenden Erfindung ist demgemäß die Bereitstellung von Pigmenten, bestehend aus im wesentlichen kugelförmigen Pigmentteilchen, nachfolgend kurz als kugelförmige Pigmente bezeichnet, auf der Basis von Oxiden, Mischoxiden oder Silikaten.

Gefunden wurden im wesentlichen kugelförmige Farbpigmente mit einem mittleren Teilchendurchmesser von kleiner 10 µm auf der Basis eines Oxids, Mischoxids oder Silikats.

Unter dem Begriff Farbpigmente werden Buntpigmente und graue bis schwarze Pigmente, nicht aber Weißpigmente verstanden. Erfindungsgemäße Pigmente können ein oder mehrere Metalle, insbesondere zwei oder drei Metalle, enthalten. Die Oxide, Mischoxide und Silikate können in unterschiedlichen Kristallstrukturen vorliegen. Die Kristallstrukturen richten sich einerseits nach den anwesenden Metallatomen, andererseits nach der Reaktionstemperatur und Verweildauer der Partikel in der Flamme des Pyrolysereaktors, sowie nach der Art der Abkühlung der Pigmentpartikel.

Die Pigmente enthalten mindestens ein farbgebendes Metall, das vorzugsweise reguläre Positionen des Kristallgitters, etwa eines Spinellgitters, in regelmäßiger Verteilung besetzt. Das farbgebende Element kann auch Plätze in einem Wirtsgitter besetzen. Beispiele hierfür sind Vanadium- oder Praseodym-dotierte Pigmente auf der Basis von ZrO₂, ZrSiO₄ und SnO₂, welche zu den Wirtsgitterpigmenten zählen.

Bevorzugte erfindungsgemäße Pigmente sind Spinelle der allgemeinen Formel AB₂O₄, worin die Metallatome A, die die Tetraederlücken des Sauerstoffgitters besetzen, für ein oder mehrere zweiwertige Elemente aus der Reihe Mg²⁺, Ca²⁺, Sr²⁺, Ba²⁺, Mn²⁺, Fe²⁺, Co²⁺, Ni²⁺, Cu²⁺ und Zn²⁺ und die Metallatome B, die die Oktaederlücken besetzen, für ein oder mehrere dreiwertige Elemente aus der Reihe Al³⁺, Ga³⁺, In³⁺, Sc³⁺, Ln³⁺, Ti³⁺, V³⁺, Cr³⁺, Fe³⁺, Ni³⁺ und Co³⁺ stehen und mindestens ein farbgebendes Metall in pigmentwirksamer Menge anwesend ist. Unter dem Begriff 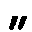 pigmentwirksame Menge" werden bei Spinellen mindestens 25 Mol-%, bezogen auf die im Pigment anwesenden Metalle, verstanden. Es kann sich auch um inverse Spinelle der allgemeinen Formel B(AB)O₄ handeln, worin die Hälfte der Metallatome B die Tetraederlücken besetzen und die Oktaederlücken von den A-Atomen und der zweiten Hälfte der B-Atome belegt werden. Schließlich sind auch sogenannte 4,2-Spinelle, worin A für ein vierwertiges Element, insbesondere Ti⁴⁺ oder Zr⁴⁺ und B für ein zweiwertiges Element, insbesondere Fe²⁺, Co²⁺ oder Ni²⁺ steht, möglich. Bevorzugte Pigmente mit Spinellstruktur enthalten ein oder mehrere A-Elemente aus der Reihe Mn²⁺, Fe²⁺, Co²⁺, Ni²⁺, Cu²⁺ und ein oder mehrere B-Elemente aus der Reihe Al³⁺, Cr³⁺, Fe³⁺, Co³⁺. Besonders bevorzugte Pigmente aus der Reihe der Spinelle sind gelb, blau, grün, braun und grau bis tiefschwarz gefärbt. Beispiele hierfür sind blaue bis grüne Pigmente der Formel Co(Al₂₋ₓ Crₓ)O₄, schwarze Pigmente der Formel Cu(Cr₂₋ₓ Feₓ)O₄ und grüne Pigmente der Formel (Ni₂₋ₓCoₓ)TiO₄, wobei x eine Zahl zwischen 0 und 2 ist.

Ein Beispiel für ein erfindungsgemäßes einfaches Metalloxid ist Cr₂O₃. Nach dem erfindungsgemäßen Verfahren sind auch kugelförmige Vanadium-dotierte und Praseodym-dotierte Metalloxide und Silikate, beispielsweise aus der Reihe SnO₂, SiO₂, ZrO₂, ZrSiO₄ mit einem D₅₀-Wert von kleiner 10 µm erhältlich. Im Verfahren gemäß ES-Patent 2 074 399 kommt es demgegenüber während der Kalzinierung eines zunächst erhaltenen kugelförmigen Vorprodukts für Vanadium-dotiertes Zirkonsilikat zu einem Zusammensintern und damit einem drastischen Anwachsen der Partikelgröße, so daß die ursprüngliche Kugelform verloren geht und das gesinterte Material gegebenenfalls gemahlen werden muß.

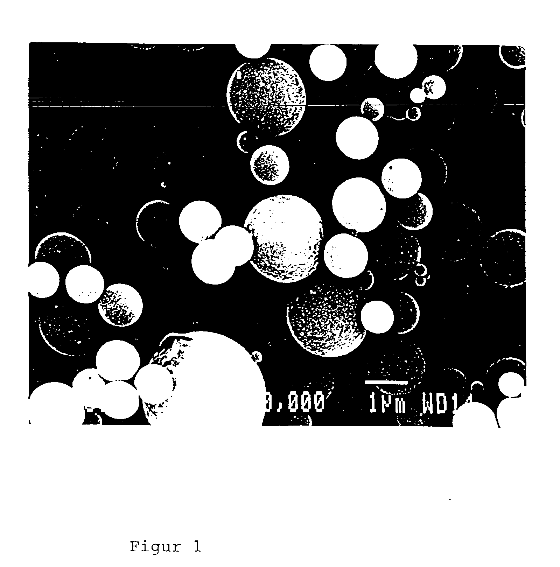

Die kugelförmige Gestalt erfindungsgemäßer Farbpigmente folgt aus Figur 1, welche eine REM-Aufnahme des schwarzen Spinellpigments der Formel Cu(CrFe)O₄ gemäß Beispiel 3 zeigt.

Der Begriff 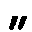 im wesentlichen kugelförmig" schließt aber auch Partikel ein, deren Kugelform etwas deformiert ist, beispielsweise durch Ausbildung einzelner Kristallflächen auf dem Partikel unter weitgehender Beibehaltung eines kugelförmigen Habitus sowie Bruchstücke von Kugeln.

Der mittlere Teilchendurchmesser (D₅₀) erfindungsgemäßer Pigmente ist kleiner 10 µm, vorzugsweise liegt er im Bereich zwischen 0,5 und 5 µm und insbesondere zwischen 1 und 3 µm. Zweckmäßigerweise ist das Partikelspektrum des Pigments sehr eng. Vorzugsweise sind im wesentlichen 100 % der Pigmentteilchen kleiner 10 µm. Besonders bevorzugt weisen mindestens 80 % der Partikel einen Teilchendurchmesser im Bereich von 0,5 bis 5 µm auf.

Die erfindungsgemäßen Farbpigmente zeichnen sich durch ihre Homogenität, die Kugelform oder eine ihr nahekommende Form, sowie die Feinheit und das enge Kornspektrum der Partikel aus. Dies führt zu überraschenden Vorteilen bei ihrer Verwendung zum Einfärben von Kunststoffen, wie insbesondere Fasern und Folien und Lacken, sowie bei der Herstellung von Dekorfarben und Emails und deren Applikation mittels Siebdruck. Der genannten Verwendung sind zusätzlich zu den erfindungsgemäßen Farbpigmenten auch im wesentlichen kugelförmige Weißpigmente, die nach einem Verfahren der Sprühpyrolysetechnik erhältlich sind, zugänglich.

Beim Schmelzspinnen von mit erfindungsgemäßen Farbpigmenten eingefärbten spinnfähigen thermoplastischen Polymeren, wie Polyolefinen, Polyamiden und Polyestern, kommt es nicht mehr zu den mit nicht-kugelförmigen Pigmenten auftretenden Betriebsstörungen. Erfindungsgemäße Farbpigmente sind auch in tiefschwarzer Farbe erhältlich. Derartige Pigmente weisen eine höhere Lichtechtheit auf als organische schwarze Farben auf. Damit lassen sich lichtbeständige schwarze Fasern erzeugen.

Bei der Herstellung von Dekorfarben, Emails und Glasfarben ist der bisher übliche Mahlschritt überflüssig, da sich die erfindungsgemäßen Farbpigmente in trockener Form den weiteren Komponenten der anwendungsspezifisch zusammengesetzten Farben zugemischt werden können. Ein weiterer Vorteil ist die verbesserte Siebdruckfähigkeit von erfindungsgemäße Farbpigmente enthaltenden Farbpasten, indem durch die Kugelform des Pigments in Verbindung mit dem engen Kornspektrum und der weitgehenden Abwesenheit eines Überkorns mit einem Durchmesser von größer 10 µm oder sogar größer 5 µm ein verbesserter Siebdurchgang erzielt wird.

Die erfindungsgemäßen kugelförmigen Pigmente sind durch ein Verfahren erhältlich, das die Schritte umfaßt:
(i) Zubereitung einer eine oder mehrere oxid- oder silikatbildende Metallverbindungen, darunter mindestens einer farbgebenden Metallverbindung in pigmentwirksamer Menge, enthaltenden Lösung, Suspension oder Emulsion,
(ii) Überführung der Lösung, Suspension oder Emulsion in ein Aerosol,
(iii) Einbringen des Aerosols in einen direkt oder indirekt beheizten Pyrolysereaktor,
(iv) Durchführung der Pyrolyse bei einer Temperatur oberhalb der Zersetzungstemperatur der Metallverbindungen und
(v) Abscheidung des Pigments aus dem Pyrolysegas.

Die dem erfindungsgemäßen Verfahren zugrundeliegende Pyrolysereaktion, die in der Literatur als Sprüh-, Flammen- oder Aerosolpyrolyse bezeichnet wird, ist, wie aus dem eingangs gewürdigten Stand der Technik hervorgeht, an sich bekannt, sie wurde jedoch überraschenderweise noch nie zur Herstellung erfindungsgemäßer kugelförmiger Pigmente, welche mindestens ein farbgebendes Metallatom in pigmentwirksamer Menge enthalten, herangezogen. Pigmentwirksam ist bei Wirtsgitterpigmenten eine Menge von im allgemeinen etwa 1 bis 5 Mol-%, bezogen auf die Metalle des Wirtsgitters. Bei anderen Farbpigmenten liegt die Menge an färbendem Metall im allgemeinen bei mindestens 25 Mol-%, meistens bei etwa 30 bis 50 Mol-%, bezogen auf Metalle im Pigment. Sofern die im Verfahren eingesetzten oxid- oder silikatbildenden Vorprodukte kein farbgebendes Metallatom enthalten, werden farblose bis weiße Produkte erhalten, die gegebenenfalls als Weißpigment in gleicher Weise verwendet werden können wie die erfindungsgemäßen Farbpigmente.

Im Pyrolysereaktor laufen die Schritte Zersetzung der oxid- oder silikatbildenden Vorstufen, Oxidation gegebenenfalls anwesender organischer Bestandteile, Oxid- oder Silikatbildung und Sintern innerhalb jedes einzelnen Partikels gleichzeitig beziehungsweise hintereinander ab. Als Ergebnis werden sphärische Partikel mit geringer spezifischer Oberfläche erhalten. Die Größenverteilung der erhaltenen Pigmentpartikel ergibt sich im wesentlichen direkt aus dem Tröpfchenspektrum des dem Reaktor zugeführten Aerosols und der Konzentration der eingesetzten Lösung oder, falls dem Reaktor eine Suspension zugeführt wird, auch aus den Dispersionsgrad.

Die Beheizung des Reaktors kann direkt, also mittels einer Flamme, oder auch indirekt von außen, beispielsweise mittels eines elektrischen Ofens, erfolgen. Wegen des bei der indirekten Beheizung erforderlichen Temperaturgradienten von außen nach innen muß der Ofen wesentlich heißer sein als der für die Pyrolyse erforderlichen Temperatur entspricht. Eine indirekte Beheizung erfordert ein temperaturstabiles Ofenmaterial und eine aufwendige Reaktorkonstruktion, andererseits ist die Gesamtgasmenge niedriger als im Falle eines Flammenreaktors. Zur direkten Beheizung können übliche Brenngase einsetzt werden, vorzugsweise wird jedoch Wasserstoff verwendet (eine Wasserstoff-Luft-Flamme erreicht eine Temperatur von maximal 2045 °C). Durch das Verhältnis von Brenngas- zur Gesamtgasmenge kann die Temperatur im Reaktor gesteuert werden. Um die Gesamtgasmenge niedrig zu halten und damit eine möglichst hohe Temperatur zu erzielen, kann dem Reaktor anstelle von Luft als O₂-Quelle für die Verbrennung des Brenngases auch Sauerstoff zugeführt werden. Die Gesamtgasmenge umfaßt auch das Trägergas für das Aerosol sowie das Gas aus der Verdampfung des Lösungsmittels des Aerosols, etwa H₂O. Im Hinblick auf die einfachere Konstruktion eines Ofens mit direkter Beheizung wird diese Ausführungsform bevorzugt. Das dem Reaktor zuzuführende Aerosol wird zweckmäßigerweise unmittelbar in die Flamme geleitet. Während als Trägergas für das Aerosol meistens Luft bevorzugt wird, ist es auch möglich, Stickstoff, CO₂, O₂ oder ein Brenngas, also beispielsweise Wasserstoff, Methan, Propan oder Butan zu verwenden.

Die Temperatur im Reaktor liegt oberhalb der Zersetzungstemperatur der Metallverbindungen, und zwar bei einer zur Oxid- oder Silikatbildung ausreichenden Temperatur, üblicherweise im Bereich zwischen 500 und 2000 °C, vorzugsweise zwischen 800 und 1300 °C. Innerhalb des üblicherweise rohrförmig ausgebildeten Reaktors bildet sich ein Temperaturgradient aus. In Abhängigkeit von der Temperatur der Flamme können bei gleicher Aerosolzusammensetzung Pigmente mit unterschiedlicher Modifikation und damit unterschiedlicher Farbe gewonnen werden: Aus einem Aerosol, das zweiwertige Co-Ionen und dreiwertige Ionen aus der Reihe Al und/oder Cr im Atomverhältnis von 1 zu 2 enthält, sind bei tiefer Flammentemperatur türkis-blaue und bei höherer Flammentemperatur türkis-grüne Pigmente erhältlich. Das Pyrolysegas wird im allgemeinen vor der Abtrennung der darin enthaltenen Pigmentpartikel teilweise abgekühlt. Das Temperaturprofil im eigentlichen Reaktor sowie die Art der Abkühlung des Pyrolysegases können die Modifikation der gebildeten Pigmentpartikel beeinflussen. Durch rasches Abkühlen ist es möglich, eine zunächst gebildete Hochtemperaturmodifikation einzufrieren. Zweckmäßigerweise wird das Pyrolysegas vor der Abtrennung der Partikel soweit abgekühlt, daß ein Zusammensintern der Partikel ausgeschlossen wird. Die maximale Temperatur vor der Abtrennung der Partikel ist stoffspezifisch. Im allgemeinen ist Abkühlung auf eine Temperatur von etwa 500 °C ausreichend.

Nach der Bildung der kugelförmigen Pigmentpartikel können diese, sofern erwünscht, zwecks Modifizierung der Oberflächeneigenschaften nachbehandelt werden. Beispielsweise kann eine solche Nachbehandlung eine Hydrophobierung sein, die sich unmittelbar an die Bildung der Partikel, gegebenenfalls nach teilweiser Abkühlung des Pyrolysegases, anschließt oder nach Abtrennung der Partikel durchgeführt wird.

Die oxid- und silikatbildenden Vorstufen, also die Metallverbindungen, lassen sich in Form einer Lösung, einer Suspension oder einer Emulsion in ein Aerosol überführen. Die Verwendung einer Suspension ist nur dann sinnvoll, wenn die Größe der ungelosten Partikel deutlich kleiner ist als die Partikelgröße der Tröpfchen des Aerosols. Sofern eine Emulsion in ein Aerosol überführt wird, handelt es sich bei der Emulsion um ein wäßrig-organisches System, wobei die oxid- oder silikatbildenden Vorstufen zweckmäßigerweise in der wäßrigen Phase gelöst sind. Gegenüber der besonders bevorzugten Ausführungsform der Erfindung, wonach eine die oxid- oder silikatbildenden Vorstufen enthaltende Lösung in ein Aerosol überführt wird, ist der Einsatz der zuvor genannten Emulsion nur dann von Interesse, wenn Produkte mit Partikelgrößen im Submikronbereich hergestellt werden sollen.

Zur Herstellung der in ein Aerosol zu überführenden Lösung, Suspension oder Emulsion können sowohl organische als auch wäßrige Lösungsmittelsysteme herangezogen werden. Bevorzugt werden wäßrige Lösungsmittelsysteme, wie Gemische aus Wasser und wasserlöslichen Alkoholen, Ketonen, Carbonsäuren oder Ethern. Besonders bevorzugt wird jedoch ein im wesentlichen aus Wasser bestehendes Lösungsmittelsystem. Die Bevorzugung von im wesentlichen Wasser als Lösungsmittel ist außer dem naheliegenden wirtschaftlichen Aspekt auch darauf zurückzuführen, daß auf diese Weise Probleme einer Verfärbung der Pigmente durch gegebenenfalls eingeschlossenen unverbrannten Kohlenstoff aus einem organischen Lösungsmittel vermieden werden.

Zur Herstellung der in ein Aerosol zu überführenden Lösung werden eine oder mehrere Metallverbindungen, die unter Pyrolysebedingungen zur Bildung eines farbigen Oxids, Mischoxids oder Silikats befähigt sind, gelöst. Bei mehr als ein Metall enthaltenden Pigmenten werden zwei oder mehrere Metallverbindungen (oxid- oder silikatbildende Vorstufen), wobei ein Metall farbbildend sein muß, im wesentlichen in einem solchen Atomverhältnis eingesetzt, das demjenigen des herzustellenden Mischoxids oder Silikats entspricht. Zur Herstellung der bevorzugten Spinelle der Formel AB₂O₄ sowie der inversen Spinelle werden demnach A und B im Atomverhältnis von etwa 1 zu 2 eingesetzt. Sofern verschiedene Elemente A oder/und B im Spinell sein sollen, etwa (A,A')(B,B')₂O₄, beträgt die Summe aus A plus A' etwa 1 und die Summe aus B plus B' etwa 2.

Zweckmäßige Metallverbindungen zur Herstellung einer wäßrigen Lösung sind insbesondere die Nitrate der zweiwertigen und dreiwertigen Metalle. Teilweise können auch die oxidbildenden Metalle in Form von Halogeniden, Salzen niederer Carbonsäuren, Sulfaten oder Chelatkomplexen eingesetzt werden. Bei der Lösungsherstellung ist bei der Auswahl der Metallverbindungen darauf zu achten, daß ein Anion eines Metallsalzes das Kation eines gegebenenfalls zusätzlich eingesetzten zweiten Metallsalzes nicht zur Ausfällung bringt. Geeignete Vorstufen für ZrO₂ sind ZrOCl₂ · Hydrat oder Zr(NO₃)₄, für SnO₂ ein Hydrat von SnCl₄ oder Sn-sulfat; als Vorstufe für TiO₂ eignen sich insbesondere Titanylchlorid und Titanylsulfat, als Vorstufe für Ti₂O₃ Ti₂(C₂O₄)₃ · 10 H₂O. Als Vorstufe für ein Metalloxid der fünften Haupt- und Nebengruppe, wie insbesondere Sb₂O₃, Bi₂O₃ und Ta₂O₅, enthaltenden Mischoxiden eignen sich insbesondere Sb(NO₃)₃, Bi(NO₃)₃, TaF₅ oder Ta₂O₅ · xH₂O (Tantalsäure). Als Vorstufe für MO₃ oder WO₃ enthaltenden Mischoxiden beziehungsweise Molybdaten und Wolframaten eignen sich Molybdänsäure, Wolframsäure oder Molybdän- beziehungsweise Wolframdioxydichlorid.

Unter Siliciumverbindungen als Vorstufe für SiO₂ und Silikate kommen in organischen Lösungsmitteln lösliche Organosilane sowie Umsetzungsprodukte von SiCl₄ mit niederen Alkoholen oder niederen Carbonsäuren infrage. Als wasserlösliche Siliciumquelle können wasserlösliche Organosilane, welche mindestens eine wasserlöslichmachende funktionelle Gruppe aufweisen, eingesetzt werden. Vorzugsweise wird ein wasserlösliches Organosilan beziehungsweise -silanol der allgemeinen Formel (RO)₃Si-(CH₂)ₙ-X oder [(RO)₃Si-(CH₂)ₘ-NR'₃]⁺A⁻ verwendet, worin R und R' gleich oder verschieden sein können und bevorzugt für Wasserstoff, Methyl oder Ethyl stehen, n für die Zahl 1, 2 oder 3, m für die Zahl 2 oder 3, X für die Gruppe -COOH oder -SO₃H oder ein Salz hiervon und A⁻ für ein Anion, insbesondere Chlorid. Bei den Organosilanen beziehungsweise -silanolen kann es sich auch um wasserlösliche vorkondensierte Produkte der vorgenannten Verbindungen handeln.

Zur Herstellung von Pigmenten mit einem silikatischen Trägermaterial enthalten die in ein Aerosol zu überführenden Lösungen sowohl eine Quelle für SiO₂ und mindestens eine Quelle für ein farbgebendes Metalloxid. Hierbei können die zuvor genannten Quellen für die Metalloxide und SiO₂ Verwendung finden. Die Quelle für SiO₂ und das oder die weiteren Metalloxide werden in dem gewünschten stöchiometrischen Verhältnis in der wäßrigen oder wäßrig/organischen Lösung eingesetzt.

Bei der Zubereitung der in ein Aerosol zu überführenden wäßrigen Lösung wird der Fachmann die einzelnen Komponenten derart auswählen, daß die in der Lösung enthaltenen oxid- und silikatbildenden Vorstufen bis zum Vernebeln der wäßrigen Lösung homogen gelöst vorliegen. Sofern einzelne Bestandteile in suspendierter Form in der Lösung vorliegen, ist sicherzustellen, daß die Partikelgröße kleiner ist als diejenige der bei der Vernebelung erhaltenen Tröpfchen.

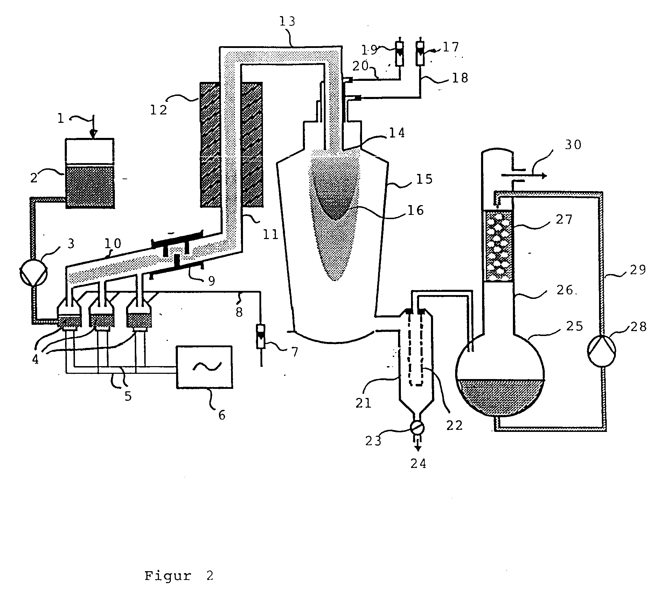

Das Prinzip einer bevorzugten Ausführungsform einer Vorrichtung zur Durchführung des erfindungsgemäßen Verfahrens folgt aus der schematischen Darstellung der Figur 2. Wesentliche Elemente der Vorrichtung sind ein Vorratsbehälter (2) für die zu vernebelnde Flüssigkeit, ein Hochfrequenzgenerator (6) mit zugehörigen Ultraschwingern (4), ein Tröpfchenabscheider (9), ein Vortrockner (11 mit 12), der eigentliche Pyrolysereaktor (15) mit Zufuhrleitungen für das vorgetrocknete Aerosol (13 mit 14), das Brenngas (20) und die Luft oder Sauerstoff (18), eine Vorrichtung zur Gas-Feststofftrennung (21), umfassend ein Filterelement (22) und eine Entnahmevorrichtung für den Feststoff (23 mit 24), eine Waschvorrichtung für das von Feststoffen befreite Reaktionsgas, umfassend eine Blase (25) und eine mit Füllkörpern (27) befüllte Waschkolonne (26), eine Umlaufleitung (29) mit einer Umlaufpumpe sowie einen Auslass für das Abgas. Bezüglich weiterer Einzelheiten wird auf die Bezugszeichenliste verwiesen.

### Bezugszeichenliste

- 1: Zufuhrleitung
- 2: Vorratsbehälter
- 3: Pumpe
- 4: Ultraschallschwinger (Transducer mit Gefäß und Trägergaszufuhrstutzen) (=Aerosolgenerator)
- 5: Steuerleitungen zu den Schwingern
- 6: Hochfrequenzgenerator
- 7: Rotameter
- 8: Gasleitung für Trägergas
- 9: Tropfenabscheider
- 10: Sammelrohr
- 11: Vortrockner
- 12: Heizaggregat
- 13: Aerosolzufuhr zum Reaktor
- 14: Düse
- 15: Pyrolysereaktor
- 16: Flamme
- 17, 19: Rotameter
- 18: Gasleitung für Luft oder O₂
- 20: Gasleitung für H₂
- 21: Abscheider
- 22: Filterelement
- 23: Absperrorgan
- 24: Pigmentaustrag
- 25: Blase
- 26: Kolonne
- 27: Kolonnen-Füllkörper
- 28: Umlaufpumpe
- 29: Umlaufleitung
- 30: Abgasleitung

Zur Überführung der die Metallverbindungen enthaltenden Lösung in einen feinen Nebel kommen übliche Vorrichtungen zur Vernebelung infrage, die sich allerdings hinsichtlich der erreichbaren Tropfengröße, der Größenverteilung der Tropfen, des Durchsatzes, des Fluid-Treibgasverhältnisses und der Ausströmgeschwindigkeit unterscheiden. Zweistoffdüsen sind in der Lage, große Mengen Flüssigkeit durchzusetzen; die kleinste erreichbare mittlere Tröpfchengröße liegt üblicherweise bei etwa 10 µm; zur Herstellung eines besonders feinen Pigmentpulvers muß gegebenenfalls eine stärker verdünnte Lösung eingesetzt werden. Mittels Ultraschall unterstützten Düsen ist es möglich, eine höhrere Tröpfchenfeinheit zu erzielen, so daß auch Pulver mit einem Korndurchmesser von kleiner 1 µm erhältlich sind. Mittels eines gasgetriebenen Aerosolerzeugers, etwa eines Collison®-Verneblers, ist es möglich, ein sehr feines Tröpfchenspektrum im Bereich von 3 µm zu erhalten, jedoch ist das Verhältnis von Trägergas zu Flüssigkeitsmenge ungünstig, so daß nur geringe Leistungen erzielt werden können. Mittels elektrostatischer Sprühverfahren ist es möglich, Nebel im Sub-Mikronbereich zu erzeugen, jedoch läßt sich mit derzeit bekannten Systemen nur ein niedriger Durchsatz realisieren. Bevorzugte Vernebler sind Ultraschallvernebler, womit problemlos Nebel mit einer Tröpfchengröße von etwa 3 bis 4 µm erhältlich sind. Außerdem ist es bei Ultraschallverneblern problemlos möglich, das Verhältnis von Gas zu Flüssigkeit frei zu variieren. Um einen ausreichenden Durchsatz zu erzielen, ist es möglich, mehrere Ultraschallschwinger miteinander zu koppeln. Das Funktionsprinzip eines Ultraschallverneblers beruht auf der Umwandlung von mechanischer (Schall-)Energie in Oberflächenenergie des Lösungsmittels. Ein Ultraschallschwinger (Transducer), eine flache runde Scheibe aus Piezokeramik wird durch hochfrequente Anregung zur Dickenschwingung angeregt. Die Schwingung überträgt sich auf die über einer Kalotte stehende Flüssigkeitssäule, an deren Oberfläche durch Kavitationseffekte eine Fontäne entsteht, die in kleinste Tröpfchen zerfällt. Bei der Auswahl der Schwinger ist dafür Sorge zu tragen, daß es bei den häufig sauren Lösungen nicht zu Korrosionserscheinungen kommt; Silicon-beschichtete Schwinger haben sich bewährt. Die Schwinger sind an den Böden der miteinander verbundenen Gefäße im Winkel von einigen Grad angebracht (die Verbindungsleitungen zwischen den in Figur 2 dargestellten Ultraschwingern (Transducer mit Gefäß) sind aus Übersichtlichkeitsgründen nicht dargestellt). Die durch Vernebelung verbrauchte Flüssigkeitsmenge wird von einem Vorratsbehälter (2) unter Konstanthaltung des Flüssigkeitsspiegels nachgeführt. Jeder Aerosolgenerator wird separat mit Trägergas versorgt, welches über ein Rotameter (7) und Leitung (8) zugeführt wird. Die einzelnen Aerosolströme der Aerosolgeneratoren werden in einem Sammelrohr (10) vereinigt. Sofern das Tröpfchenspektrum des Aerosols teilweise zu große Tröpfchen enthält, die zu zu großen Feststoffpartikeln führen würden, ist es zweckmäßig, zu große Tröpfchen mittels eines Tröpfchenseparators (9) abzuscheiden. Es ist zweckmäßig, den Tröpfchenabscheider derart auszulegen, daß Tröpfchen mit einem Durchmesser von größer 10 µm, gegebenenfalls auch einem maximalen Tröpfchendurchmesser im Bereich zwischen 5 und 10 µm, abgeschieden werden und die Lösung in den Generator zurückgeführt wird. Die Funktion des Tröpfchenabscheiders beruht auf einer Beschleunigung des Aerosols und einer anschließenden Umlenkung der Strömung, wobei die großen Tröpfchen an einer senkrecht zur Strömung stehenden Platte abgeschieden werden. Je nach dem gewünschten maximalen Tröpfchendurchmesser kann die Abscheiderate bis zu 50 % und darüber betragen.

Um möglichst kugelförmige Feststoffpartikel zu erhalten, hat es sich als vorteilhaft erwiesen, das Aerosol vor dem Eintritt in den Pyrolysereaktor vorzutrocken, beispielsweise in einem Strömungsrohr (11) mit einem darum angeordneten Heizaggregat (12). Die in den Tröpfchen ablaufenden Prozeßschritte, nämlich Verdampfen des Lösungsmittels, Ausfällen der Vorstufen des oxid- oder silikatbildenden Materials, Trocknung, Zersetzung und anschließende Sinterung benötigen unterschiedliche Zeitspannen, wovon das Verdampfen des Lösungsmittels der langsamste Schritt ist. Daher ist es günstig, das Aerosol in einer dem Flammenreaktor vorgeschalteten Trocknungsvorrichtung, etwa einem beheizten Rohr, ganz oder teilweise vorzutrocknen. Wird auf die Vortrocknung verzichtet, so besteht die Gefahr, daß ein Produkt mit breiterem Kornspektrum und insbesondere zu viel Feinanteil erhalten wird. Die Temperatur des Vortrockners richtet sich nach der Konzentration der gelösten Vorstufen als auch der Auswahl derselben. Üblicherweise liegt die Temperatur im Vortrockner oberhalb des Siedepunktes des Lösungsmittels bis 250 °C; bei Wasser als Lösungsmittel liegt die Temperatur im Vortrockner vorzugsweise zwischen 120 und 250 °C, insbesondere zwischen 150 und 200 °C.

Das über eine Leitung (13) dem Pyrolysereaktor (15) zugeführte vorgetrocknete Aerosol tritt über eine Austrittsöffnung (14) in den Reaktor ein. Bei der in der Figur dargestellten Ausführungsform tritt der über ein Rotameter (19) und eine Leitung (20) zugeführte Wasserstoff durch einen um die Aerosolzufuhrleitung gelegten konzentrischen Ring ein. Die über eine Rotameter (17) und eine Leitung (18) zugeführte Sekundärluft wird durch einen weiteren konzentrischen Ring eingeleitet. Durch diese Anordnung ergeben sich ausgeglichene Impulsstromdichten. Die Art der Zufuhr des Aerosols, des Brenngases und der Sekundärluft ist jedoch nicht auf die in der Figur dargestellte Ausführungsform beschränkt. Zur Erzeugung einer Flamme (16) enthält der Reaktor zusätzlich eine in der Figur nicht gezeigte Zündvorrichtung. Um ein ausgeglichenes Temperaturprofil zu erzeugen, wird der Brennraum, der vorzugsweise rohrförmig ausgebildet ist, isoliert (nicht gezeigt). An den Brennraum des Reaktors schließt sich eine Kühlzone an - bei dem Reaktor gemäß Figur 2 ist die Kühlzone der untere (flammenfreie) Raum des Reaktors.

Das Feststoffpartikel enthaltende Reaktionsgas tritt nach Verlassen des Reaktors in teilweise abgekühlter Form in eine Vorrichtung (21) zur Trennung der Feststoffpartikel vom Reaktionsgas ein. Diese Trennvorrichtung umfaßt ein Filterelement (22), ein Absperrorgan (23), das zum Pigmentaustrag (24) führt. Vorteilhafte Filterelemente sind Sintermetallfilter und Keramikfilter, wobei letztere besonders bevorzugt werden, da sie bis zu 500 °C einsetzbar sind und lange Abkühlstrecken vermieden werden können. Das das Filterelement passierende Abgas wird in einer Waschvorrichtung (25 bis 29) gewaschen und tritt über die Abgasleitung (30) aus. Sofern mittels der Abscheidevorrichtung nicht alle Feststoffpartikel zurückgehalten werden konnten, sammeln sich diese Stoffe in der Waschflüssigkeit an und können einer Aufbereitung zugeführt werden.

Das erfindungsgemäße Verfahren erlaubt die Herstellung von Pigmenten aus im wesentlichen kugelförmigen Teilchen mit einer durch die Wahl der Verfahrensparameter leicht einstellbaren mittleren Korngröße und Korngrößenverteilung, so daß bisher übliche Mahlprozesse überflüssig sind.

Die Erfindung wird anhand der nachfolgenden Beispiele näher erläutert.

### Beispiele

Die Herstellung verschiedener Pigmente erfolgte in einer Vorrichtung gemäß Figur 2, so daß auf die Beschreibung der Vorrichtung nicht erneut eingegangen wird. Eingesetzt wurden in allen Beispielen wäßrige Lösungen von Metallsalzen. Der Reaktor enthielt je eine Temperaturmeßsonde im oberen, mittleren und unteren Drittel (To, Tm, Tu).

### Beispiel 1: Herstellung von Co(AlCr)O₄

Aus 9,83 g Al(NO₃)₃ · 9 H₂O, 10,46 g Cr(NO₃)₃ · 9 H₂O und 7,60 g Co(NO₃)₂ · 6 H₂O wurde eine wäßrige Lösung hergestellt (Molverhältnis Al:Cr:Co = 1:1:1; 3,62 %ig bezogen auf Gesamtmetallgehalt). Diese Lösung wurde mittels Ultraschall-Technologie in ein Aerosol überführt und versprüht (Trägergas 1000 l/h Luft), nach Passage eines Tröpfchenabscheiders (max. 8 µm) bei 150 °C vorgetrocknet und anschließend im Reaktor in einer Knallgasflamme zur Reaktion gebracht. Die Temperaturen betrugen: To 678 °C, Tm 755 °C, Tu 517 °C. In 90 Minuten wurden 13,6 g Produkt erhalten. Man erhält es als homogenes, ultrafeines, türkisgrün, kristallines Pigmentpulver mit kugelförmigen Kristalliten. Die Phasenreinheit wurde mittels XRD überprüft. Die Teilchenverteilung lieferte folgende Werte: D₅₀ = 1,0 µm, D₉₀ = 0,5 µm, D₁₀ = 3,5 µm.

Nach Absenkung der Temperaturen im Reaktor auf To 613 °C, Tm 563 °C und Tu 388 °C wurde ein türkis-blaues Pigment erhalten.

### Beispiel 2: Herstellung von FeAl₂O₄

Aus 735,3 g Fe(NO₃)₃ · 9 H₂O und 682,8 g Al(NO₃)₃ · 9 H₂O und Wasser wurden 5,4 kg Lösung hergestellt (Molverhältnis Fe:Al = 1:2). Diese Lösung wurde mit 1600 l/h Luft vernebelt und das Aerosol nach Vertrocknung bei 150 °C in eine Knallgasflamme überführt. Erhalten wurde ein braunes, kristallines Pigment. Das Pigment hatte Spinellstruktur und bestand aus kugelförmigen Partikeln; D₅₀ = 0,77 µm, D₉₀ = 0,4 µm, D₁₀ = 1,55 µm.

### Beispiel 3: Herstellung von CuCrFeO₄

Zu 139,2 g Cu(NO₃)₂ · 3 H₂O und 233,0 g Fe(NO₃)₃ · 9 H₂O und 230,7 g Cr(NO₃)₃ · 9 H₂O wurden 1,41 l Wasser gegeben (Molverhältnis Cu:Cr:Fe = 1:1:1). Diese Lösung wurde mittels Ultraschall vernebelt und mit Stickstoff als Trägergas nach Passage eines Tröpfchenabscheiders und Vortrockners (150 °C) in eine Knallgasflamme überführt. Dabei wurde ein schwarzes, kristallines Pigment mit Spinellstruktur erhalten. Figur 1 zeigt eine REM-Aufnahme, aus welcher die perfekte Kugelform hervorgeht. Kornverteilung D₅₀ = 1,3 µm, D₉₀ = 0,6 µm, D₁₀ = 2,7 µm.

### Beispiel 4: Herstellung von SnO₂/Cr₂O₃

Eine Lösung von 292 g SnCl₄ · 5 H₂O, 7,68 g Cr(NO₃)₃ · 9 H₂O und 1700 ml Wasser wurde gemäß Beispiel 1 zur Reaktion gebracht (Gewichtsverhältnis Sn:Cr = 99:1). Es entstand ein rosa-farbiges Pigment.

### Beispiel 5: Herstellung von ZrO₂/V₂O₅

Eine essigsaure Lösung von 585,95 g Zirkonylacetat (ZrO₂-Gehalt 22,5 %), 4,6 g NH₄VO₃ und 1,4 l Wasser wurde gemäß Beispiel 1 zur Reaktion gebracht (Gewichtsverhältnis Zr:V = 98:2). Es entstand ein gelbes Pigment aus kugelförmigen Partikeln. D₅₀ = 0,9 µm, D₉₀ = 0,4 µm, D₁₀ = 1,9 µm.

### Vergleichsbeispiel 1

Untersucht wurde die Auswirkung einer Kalzinierungstemperatur, wie sie im Rahmen des Verfahrens gemäß ES-PS 2 074 399 erforderlich ist, auf das in Beispiel 5 erhaltene Vanadium-dotierte Zirkoniumdioxid:

4 g Pigment wurden auf 1500 °C aufgeheizt und 6 Minuten bei 1500 °C gehalten. Das zusammengesinterte Produkt wurde zerdrückt. Die Kornverteilung wurde wie üblich mittels Laserbeugung (CILAS) ermittelt, wozu die Probe in Wasser in Gegenwart von Na-pyrophosphat mittels eines Ultraschallmischers suspendiert wurde:

Das enge Kornspektrum des Ausgangsprodukts wurde erheblich verbreitert: D₁₀ = 22 µm, D₂₀ = 15 µm, D₃₀ = 9,8 µm, D₅₀ = 5,2 µm, D₇₀ = 2,7 µm, D₉₀ = 0,9 µm. Durch Sinterung sind feste Agglomerate entstanden, die nur durch Mahlen zerkleinert werden konnten.

### Beispiel 6

Hergestellt wurde in Analogie zu den Beispielen 1 bis 3 ein schwarzer Spinellfarbkörper der Formel CoNiCrFeO₄ (FK-Nr. 402), wobei jeweils die Nitrate der Metalle eingesetzt wurden. Der erfindungsgemäße Farbkörper wurde in verschiedenen Anwendungen im Vergleich zu einem klassisch hergestellten nicht-kugelförmigen Farbkörper der gleichen Zusammensetzung (FK-Nr. 24137 der Cerdec AG) untersucht.

### a)Inglasur-Dekorfarben-Anwendung (Hochtemperatur-Schnellbrand)

Es wurden 3,75 g Glasfluß (Nr. 10115 der Cerdec AG) mit 1,25 g Farbkörper ohne Vormischen auf einer Anpastmaschine mit einem Medium (80820 der Cerdec AG) dispergiert. Nach einem Indirektdruck (Abziehbildtechnik) wurde auf Porzellan in einem Gas-Tunnel-Ofen bei 1220 °C (Durchlaufzeit 90 min) gebrannt. Die Tabelle enthält die L*a*b*-Werte nach der CIELAB-Formel (DIN 6174).

| FK-Nr. | System | L* | a* | b* |
|---|---|---|---|---|
| 24137 | CoNiCrFeO₄ | 8,47 | 0,77 | 0,50 |
| 402 | CoNiCrFeO₄ | 6,36 | 1,05 | 0,86 |

Der erfindungsgemäße Farbkörper führte zu einem tieferen schwarz (= geringerer L*-Wert).

### b)Aufglasur-Dekorfarben-Anwendung

Es wurden 4 g Glasfluß (Nr. 10150 der Cerdec AG) mit 1 g Farbkörper ohne Vormischen auf einer Anpastmaschine mit einem Medium dispergiert. Nach einem Indirektdruck wurde auf Porzellan in einem Elektro-Kammer-Ofen bei 820 °C, 120 min Aufheizzeit und 10 min Haltezeit gebrannt.

| FK-Nr. | System | L* | a* | b* |
|---|---|---|---|---|
| 24137 | CoNiCrFeO₄ | 19,43 | 0,30 | -0,10 |
| 402 | CoNiCrFeO₄ | 17,64 | 0,52 | 0,11 |

### c)Kunststoff-Einfärbungen

Es wurden 0,75 g Farbkörper mit 2 g PVC-Paste angepastet, mit einem 300 µm Schlittenabstand zur Folie gezogen und anschließend getrocknet.

| FK-Nr. | System | L* | a* | b* |
|---|---|---|---|---|
| 24137 | CoNiCrFeO₄ | 5,26 | 0,83 | 0,54 |
| 402 | CoNiCrFeO₄ | 4,68 | 0,76 | 0,92 |

## Patentansprüche

1. Kugelförmiges Farbpigment mit einem mittleren Teilchendurchmesser von kleiner 10 µm auf der Basis eines Oxids, Mischoxids oder Silikats.

2. Kugelförmiges Farbpigment nach Anspruch 1,
dadurch gekennzeichnet,
daß es sich um ein Mischoxid mit Spinellstruktur handelt.

3. Kugelförmiges Farbpigment nach Anspruch 2,
gekennzeichnet durch die Formel AB₂O₄ oder B(AB)O₄, worin A für ein oder mehrere zweiwertige Kationen aus der Reihe Mn²⁺, Fe²⁺, Co²⁺, Ni²⁺ und Cu²⁺ und B für ein oder mehrere dreiwertige Kationen aus der Reihe Al³⁺, Cr³⁺, Fe³⁺ und Co³⁺ steht, oder gekennzeichnet durch 4,2-Spinelle, worin das zweiwertige Metall für Fe²⁺, Co²⁺ oder/und Ni²⁺ und das vierwertige Metall für Ti⁴⁺ oder Zr⁴⁺ steht.

4. Kugelförmiges Farbpigment nach einem der Ansprüche 1 bis 3,
dadurch gekennzeichnet,
daß mindestens 80 % der Partikel einen Teilchendurchmesser im Bereich von 0,5 bis 5 µm aufweisen.

5. Verfahren zur Herstellung eines kugelförmigen Farbpigments gemäß einem der Ansprüche 1 bis 4,
dadurch gekennzeichnet,
daß es die Schritte umfaßt:
(i) Zubereitung einer eine oder mehrere oxid- oder silikatbildende Metallverbindungen, darunter mindestens einer farbgebenden Metallverbindung in pigmentwirksamer Menge, enthaltenden Lösung, Suspension oder Emulsion,
(ii) Überführung der Lösung, Suspension oder Emulsion in ein Aerosol,
(iii) Einbringen des Aerosols in einen direkt oder indirekt beheizten Pyrolysereaktor,
(iv) Durchführung der Pyrolyse bei einer Temperatur oberhalb der Zersetzungstemperatur der Metallverbindungen und
(v) Abscheidung des Pigments aus dem Pyrolysegas.

6. Verfahren nach Anspruch 5,
dadurch gekennzeichnet,
daß man das Aerosol vor dem Einbringen in den Pyrolysereaktor, vorzugsweise nach Passage eines Tröpfchenseparators, bei einer Temperatur im Bereich von oberhalb des Siedepunkts der Lösungsmittel bis 250 °C vortrocknet.

7. Verfahren nach einem der Ansprüche 5 oder 6,
dadurch gekennzeichnet,
daß man als Lösungsmittel Wasser oder ein überwiegend Wasser enthaltendes Lösungsmittelgemisch verwendet.

8. Verfahren nach einem der Ansprüche 5 bis 7,
dadurch gekennzeichnet,
daß man den Pyrolysereaktor direkt, vorzugsweise mittels einer Knallgasflamme (H₂/O₂ oder H₂/Luft) beheizt.

9. Verfahren nach einem der Ansprüche 5 bis 8,
dadurch gekennzeichnet,
daß man die Metallverbindungen in Form eines wasserlöslichen Salzes, dessen Anion ein gegebenenfalls gleichzeitig anwesendes zweites Kation nicht zur Ausfällung bringt, einsetzt.

10. Verfahren nach einem der Ansprüche 5 bis 9,
dadurch gekennzeichnet,
daß man zur Herstellung von Farbpigmenten mit Spinellstruktur Verbindungen zweiwertiger Metalle aus der Reihe Mn²⁺, Fe²⁺, Co²⁺, Ni²⁺ und Cu²⁺ und Verbindungen dreiwertiger Metalle aus der Reihe Al³⁺, Cr³⁺, Fe³⁺ und Co³⁺ und zur Herstellung von 4,2-Spinellen Verbindungen der genannten zweiwertiger Metalle und Verbindungen vierwertiger Metalle aus der Reihe Ti⁴⁺ und Zr⁴⁺ in spinellbildendem Molverhältnis einsetzt, wobei jeweils ein oder mehrere zwei- und drei- oder vierwertige Metalle anwesend sein können.

11. Verfahren nach einem der Ansprüche 5 bis 10,
dadurch gekennzeichnet,
daß man für ein im wesentlichen wäßriges Aerosol zwei- und dreiwertige Metalle in Form ihres Nitrats einsetzt und als Vorstufe für ZrO₂ Zirconiumtetranitrat oder ZrOCl₂ · Hydrat und als Vorstufe für SnO₂ ein Zinntetrachlorid-hydrat einsetzt.

12. Verfahren nach einem der Ansprüche 5 bis 10,
dadurch gekennzeichnet,
daß man als SiO₂-bildende oder silikatbildende Metallverbindung ein im wesentlichen wasserlösliches Organosilan oder -silanol der allgemeinen Formel (RO)₃Si-(CH₂)ₙ-X oder [(RO)₃Si-(CH₂)ₘ-NR'₃]⁺A⁻ oder wasserlösliche Kondensate dieser Verbindungen verwendet, worin R und R' gleich oder verschieden sein können und für Wasserstoff, Methyl oder Ethyl, n für die Zahl 1, 2 oder 3, m für die Zahl 2 oder 3, X für die Gruppe -COOH oder -SO₃H oder ein Salz hiervon und A⁻ für ein Anion, insbesondere Chlorid, stehen.

13. Verfahren nach einem der Ansprüche 5 bis 12,
dadurch gekennzeichnet,
daß man eine im wesentlichen wäßrige Lösung, enthaltend eine oder mehrere wasserlösliche oxid- oder silikatbildende Metallverbindungen mittels eines Ultraschallverneblers in ein Aerosol überführt, dieses nach Passage eines Tröpfchenseparators zwecks Abscheidung von Tröpfchen mit einem Durchmesser von größer etwa 10 µm durch einen auf im Bereich von 120 bis 200 °C beheizten Vortrockner leitet, das vorgetrocknete Aerosol einem mittels einer Knallgasflamme direkt beheizten Pyrolysereaktor zuführt und das Farbpigment mittels eines Sintermetall- oder Keramikfilters vom Pyrolysegas abtrennt.

14. Verwendung der gemäß einem der Ansprüche 1 bis 4 oder der nach dem Verfahren der Ansprüche 5 bis 13 erhältlichen kugelförmigen Farbpigmente sowie nach dem gleichen Verfahren erhältlicher Weißpigmente zum Herstellen von keramischen Dekoren und zum Einfärben von Kunststoffen, synthetischen Folien und Fasern sowie Lacken.

15. Verwendung nach Anspruch 14,
dadurch gekennzeichnet,
daß man faserbildende thermoplastische Polymere im Schmelzzustand mit den kugelförmigen Farbpigmenten einfärbt und anschließend mittels Schmelzspinnen spinnt.

16. Verwendung nach Anspruch 14,
dadurch gekennzeichnet,
daß man das kugelförmige Farbpigment ohne Mahlprozess mit einer Glasfritte abmischt und nach Zugabe eines Mediums mittels Siebdruck direkt oder mittels Abziehbildtechnik auf das zu dekorierende Substrat appliziert.
